# EUROPEAN PATENT APPLICATION

(11) **EP 4 588 648 A1**
(43) Date of publication of application: **23.07.2025**
(21) Application number: 25151917.9
(22) Date of filing: 15.01.2025
(51) Int. Cl.: B29C 65/78, B29C 65/50, B29C 65/10, B65B 9/20, B65B 41/18, B65B 57/04, B65B 61/18, B29K 705/02

(54) **APPARATUS AND METHOD FOR APPLYING A SEALING STRIP OF A HEAT-SEALABLE MATERIAL TO A WEB OF PACKAGING MATERIAL, PACKAGING MACHINE FOR FORMING SEALED PACKAGES**

(30) Priority: 22.01.2024 IT 202400001101
(71) Applicant: Tetra Laval Holdings & Finance S.A., 1009 Pully (CH)
(72) Inventor: RICCO', Marco, 41123 Modena (IT); BORASI, Gabriele, 41123 Modena (IT); ESPOSITO, Giuseppe, 41123 Modena (IT)
(74) Representative: Tetra Pak Patent Attorneys

(57) **Abstract**

There is described a strip application apparatus (12) for applying a sealing strip (13) of a heat-sealable material onto a web (4) of packaging material, the strip application apparatus (12)comprising a strip sealing device (19) configured to seal a longitudinal portion (13A) of the sealing strip (13) to a longitudinal edge (4A) of the web (4) of packaging material, and a control apparatus (CA) configured to determine the position of the strip sealing device (19) with respect to a longitudinal border (4*) of the web (4) of packaging material; the a control apparatus (CA) having a reference marker (38) connected to the strip sealing device (19), an imaging device (34) arranged in a fixed position with respect to the longitudinal border (4*) and configured to acquire at least one image of the longitudinal border (4*) and of the reference marker (38) and a control unit (CU) connected to the imaging device (34) and configured to determine a transversal distance (D) between the reference marker (38) and the longitudinal border (4*) and to evaluate a correct position of the strip sealing device (19) with respect to the longitudinal border (4*) as a function of the transversal distance (D).

## Description

### TECHNICAL FIELD

The present invention relates to an apparatus for applying a sealing strip of a heat-sealable material to a web of packaging material.

The present invention further relates to a packaging machine for forming sealed packages filled with a pourable product having an apparatus for applying a sealing strip of a heat-sealable material to a web of packaging material.

The present invention further relates to a method for applying a sealing strip of a heat-sealable material to a web of packaging material.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package has a longitudinal sealing band, a top transversal sealing band and a bottom transversal sealing band.

A typical packaging machine comprises a conveying device for advancing the web of packaging material, the sterilization apparatus for sterilizing the web of packaging material prior to its formation into the tube, a tube forming and sealing device configured to form the tube from the advancing web of packaging material and to longitudinally seal the tube, a filling device for filling the tube with the pourable product and the package forming apparatus adapted to form, transversally seal and cut individual packages from the tube of packaging material.

Furthermore, prior to folding and longitudinally sealing a sealing strip of heat-seal plastic material is applied and sealed onto a first longitudinal edge of the web of packaging material. The web of packaging material is folded such that the sealing strip is in contact with the inner side of the tube. Thus, the sealing strip gets into contact with the pourable product.

More specifically, the sealing strip is normally heat-sealed to the layer of heat-seal plastic material forming the inner face of the package at a pressing station to which the web of packaging material and the sealing strip, one or both heated beforehand, are fed along, respectively, the web advancement path and a strip advancement path, and where the sealing strip is pressed onto the first longitudinal edge of the web of packaging material. After application, the sealing strip has a first longitudinal portion heat-sealed to the first longitudinal edge of the web, and a second longitudinal portion projecting from the first longitudinal edge of the web.

During formation of the tube from the web of packaging material together with the sealed sealing strip, a second longitudinal edge of the web of packaging material opposite to the first longitudinal edge is laid on the outside of the first longitudinal edge with respect to the axis of the tube being formed. More specifically, the sealing strip is located entirely inside the tube, and the face of the second longitudinal edge facing the axis of the tube is superimposed partly on the second longitudinal portion of the sealing strip, and partly on the face of the first longitudinal edge located on the opposite side with respect to the first portion of the sealing strip.

The main scope of the sealing strip is to avoid that the first longitudinal edge of the web of packaging material gets into contact with the pourable product, as otherwise the packaging material would absorb the pourable product.

Additionally, the sealing strip prevents microorganisms possibly present on the first longitudinal edge of the web of packaging material from contaminating the pourable product packed in the package.

Furthermore, the sealing strip provides for improved strength and improved gas barrier properties of the seam portion. In order for the sealing strip to properly function, it is necessary to correctly position the sealing strip with respect to the web of packaging material.

The strip application apparatus comprises an advancement device adapted to advance the sealing strip along the strip advancement path and for placing the first longitudinal portion of the sealing strip onto the web of packaging material and a strip sealing device for sealing the sealing strip onto the web of packaging material. The strip sealing device further comprises a sealing head adapted to heat the web of packaging material and/or the sealing strip and pressure rollers for pressing the web of packaging material and the sealing strip at a pressuring station.

Even though the strip application apparatuses of the known type provide for good results and work satisfactorily well, a need is felt within the industry to further improve the operation and the accuracy of the strip application apparatuses.

### DISCLOSURE OF INVENTION

It is therefore an object of the present invention to provide an apparatus for applying a sealing strip of a heat-sealable material to a web of packaging material addressing the drawbacks described above and, in particular, being easy and economical to be manufactured.

A further object of the present invention is to provide a packaging machine for forming sealed packages filled with a pourable product having an apparatus for applying a sealing strip of a heat-sealable material to a web of packaging material addressing the drawbacks described above and, in particular, being easy and economical to be manufactured.

A further object of the present invention is to provide a method for applying a sealing strip of a heat-sealable material to a web of packaging material addressing the drawbacks described above and, in particular, being easy and economical to be implemented.

According to the invention there are provided an apparatus for applying a sealing strip of a heat-sealable material to a web of packaging material, a packaging machine for forming sealed packages filled with a pourable product having an apparatus for applying a sealing strip of a heat-sealable material to a web of packaging material and a method for applying a sealing strip of a heat-sealable material to a web of packaging material according to the appended claims.

### BRIEF DESCRIPTION OF THE DRAWINGS

A non-limiting embodiment of the present invention will be described by way of example with reference to the accompanying drawings, in which:
- figure 1 is a schematic view of a packaging machine having a strip application apparatus according to the present invention, with parts removed for clarity;
- figure 2 is a schematic and perspective view of a package obtained during operation of the packaging apparatus of Figure 1, with parts removed for clarity;
- figure 3 is a lateral view of a detail of a strip sealing device of the strip application apparatus of figure 1, with parts removed for clarity;
- figure 4 is a perspective view of the strip sealing device of figure 3 with parts removed for clarity;
- figure 5 is a perspective view of the strip application apparatus in a first operative position with parts removed for clarity;
- figure 6 is a perspective view of the strip application apparatus in a second maintenance position with parts removed for clarity;
- figures 7 is an enlarged view of a detail of figures 5 and 6; and
- figure 8 shows schematically an image obtainable with an imaging device of a control apparatus of the strip application apparatus.

### BEST MODES FOR CARRYING OUT THE INVENTION

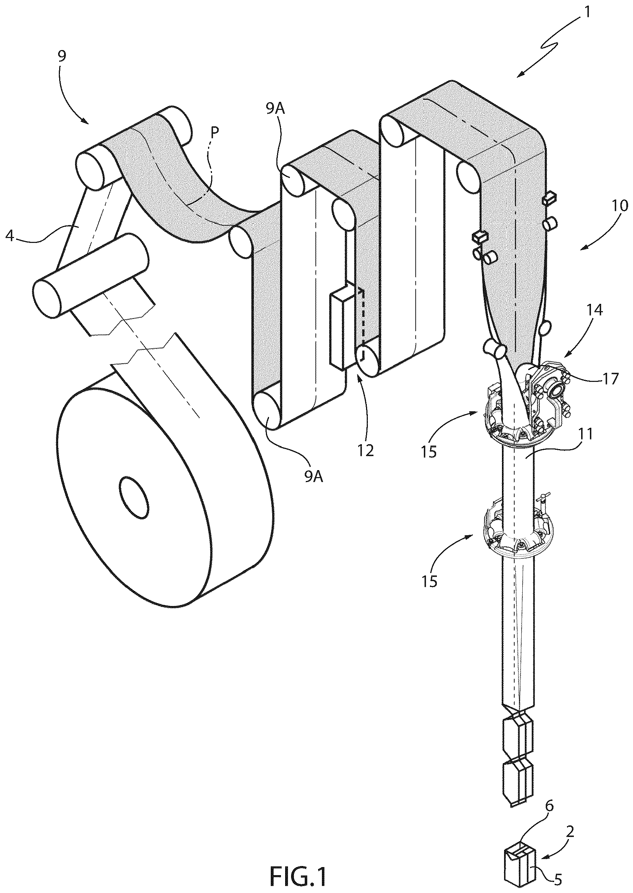

Number 1 in figure 1 indicates as a whole a packaging machine for packaging pourable products, in particular pourable food products, such as milk, cream, yoghurt drinks, yoghurt, fruit juice, wine, tomato sauce, sugar, salt, emulsions, solutions containing solid particles (e.g. legumes), etc., into packages 2.

Advantageously, the packages 2 are formed from a multilayer packaging material. The multilayer packaging material comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner surface 3 of the packages 2 contacting the pourable product packaged within the packages 2.

According to some possible non-limiting embodiments, the multilayer packaging material comprises a layer of gas- and light-barrier material, e.g. aluminum foil or ethylene vinyl alcohol (EVOH) film, in particular being arranged between one of the layers of heat-seal plastic material and the layer of fibrous material. Preferentially, the multilayer packaging material also comprises a further layer of heat-seal plastic material being interposed between the layer of gas- and light-barrier material and the layer of fibrous material. Preferentially, the multilayer packaging material is provided as an endless web 4 of packaging material.

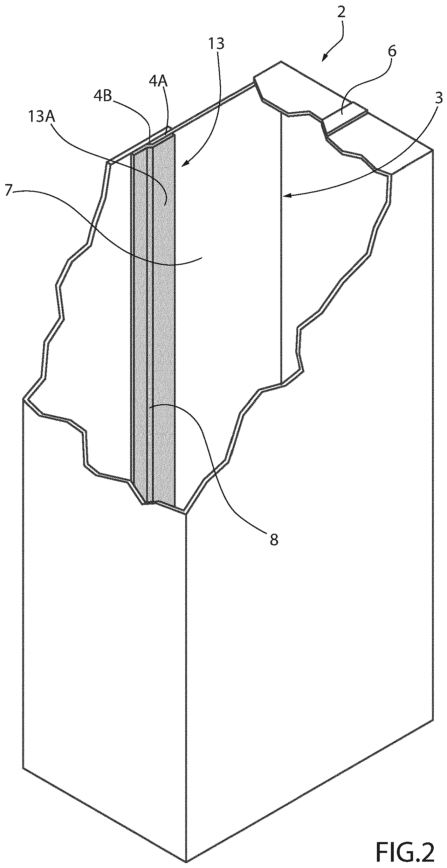

With particular reference to figures 1 and 2, each package 2 comprises a longitudinal seam portion 5 and a pair of transversal seal portions 6, in particular a top transversal seal portion and a bottom transversal seal portion (i.e., one transversal seal portion 6 at an upper end of the package 2 and another transversal seal portion 6 at a lower end of the package 2).

Within each package 2, an inner space 7 containing the pourable product is defined and delimited by the inner surface 3. In other words, the inner surface 3 faces the inner space 7 and is in contact with the pourable product.

Each package 2 comprises a sealing strip section 8 sealed and/or heat-fused onto the inner surface 3 and extending (substantially) parallel to the respective longitudinal seam portion 5.

With particular reference to figures 1 and 2, the packaging machine 1 comprises:
- a conveying apparatus 9 for advancing the web 4 of packaging material along a web conveying path P through guiding elements, in particular through a number of rollers 9A, to a tube forming and sealing unit 10, configured to gradually fold the web 4 of packaging material into a tube 11, preferentially by overlapping opposite longitudinal edges of the web 4 of packaging material with one another, and longitudinally sealing the tube 11;
- a strip application apparatus 12 for applying a sealing strip 13 of a heat-sealable material, in particular a heat-sealable plastic material, onto a longitudinal edge of the web 4 of packaging material (the sealing strip section 8 of each package 2 being formed by a portion of the sealing strip 13);
- a filling device 14 for filling the tube 11 with the pourable product; and
- a package forming unit (not shown) arranged along the web conveying path P downstream of the tube forming and sealing unit 10 and configured to form, transversally seal and cut the advancing tube 11 for forming the packages 2.

The strip application apparatus 12 is arranged upstream of the tube forming and sealing unit 10 along the web conveying path P. Preferentially, the packaging machine 1 also comprises a sterilizing unit (not shown) to sterilize the advancing web 4 of packaging material.

More in detail, the web 4 of packaging material comprises a longitudinal edge 4A and a further longitudinal edge 4B spaced apart from the longitudinal edge 4A. In particular, the longitudinal edge 4A and the further longitudinal edge 4B are spaced apart along a transversal axis of the web 4 of packaging material. Furthermore, the tube forming and sealing unit 10 is configured to overlap the longitudinal edge 4A and the further longitudinal edge 4B with one another. As will be described in more detail further below, overlapping of the longitudinal edge 4A and the further longitudinal edge 4B occurs with the sealing strip 13 having been sealed and/or heat-fused to the longitudinal edge 4A.

Preferentially, the tube forming and sealing unit 10 comprises at least two forming ring assemblies 15 configured to fold in cooperation with one another the web 4 of packaging material gradually into the tube 11. Furthermore, the tube forming and sealing unit 10 comprises a longitudinal sealing device (not shown) being configured to longitudinally seal the tube 11 along the longitudinal seam portion 5. In particular, the longitudinal sealing device may be of the kind operating by means of induction heating or by a stream of a hot fluid or by means of ultrasound. The longitudinal sealing device comprises a sealing head at least partially interposed between the forming ring assemblies 15.

The filling device 14 comprises a filling pipe 17 in fluid connection with a pourable product storage tank (not shown) for storing/providing for the pourable product to be packaged. The filling pipe 17 is at least partially arranged within the tube 11 and is configured to direct, in use, the pourable product into the tube 11.

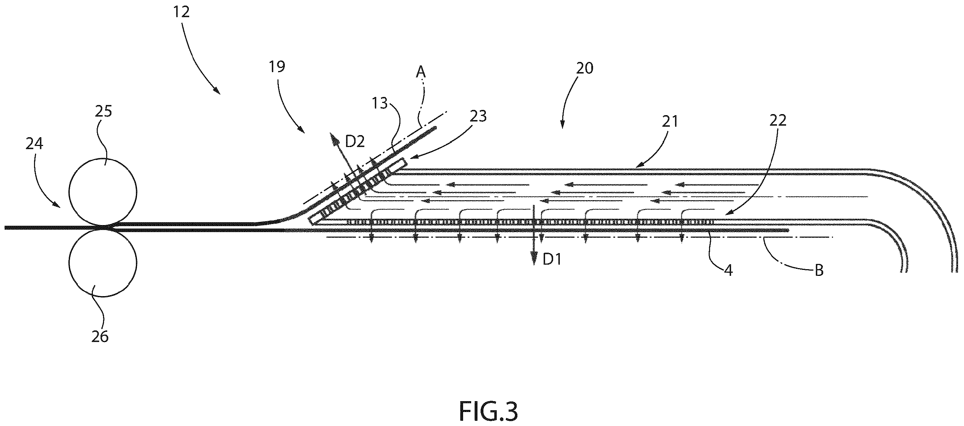

With particular reference to figures 3 to 6, the strip application apparatus 12 comprises:
- an advancement device 18 configured to advance the sealing strip 13 towards and onto the web 4 of packaging material, in particular towards and onto the longitudinal edge 4A;
- a strip sealing device 19 configured to seal the sealing strip 13, in particular a longitudinal portion 13A of the sealing strip 13, to the web 4 of packaging material, in particular to the longitudinal edge 4A.

The strip sealing device 19 is configured to seal the sealing strip 13, in particular the longitudinal portion 13A, to the web 4 of packaging material, in particular to the longitudinal edge 4A, by heating the web 4 of packaging material, in particular the longitudinal edge 4A, and/or by heating the sealing strip 13, in particular the longitudinal portion 13A. The strip sealing device 19 is further configured to press the web 4 of packaging material, in particular the longitudinal edge 4A, and the sealing strip 13, in particular the longitudinal portion 13A, against one another.

More in detail, the strip sealing device 19 can be of any kind suitable to heat the sealing strip 13 and/or the web 4 of packaging material. The strip sealing device 19 can be of the type generating heat by means of induction or by means of a hot fluid, such as hot air.

According to a first embodiment (not shown), the strip sealing device 19 comprises a sealing head configured to heat by means of induction the sealing strip 13 and/or the web 4 of packaging material.

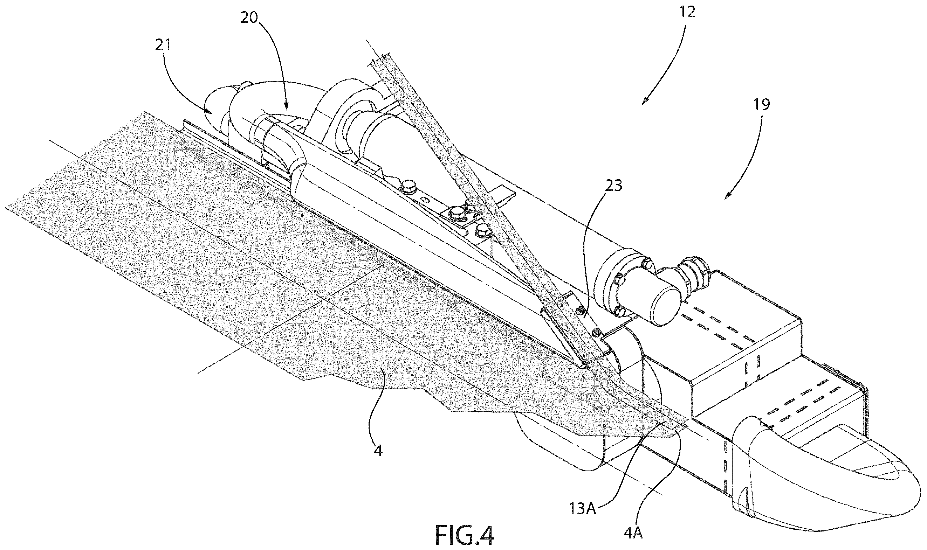

According to a second embodiment shown in figures 3 and 4, the strip sealing device 19 comprises a heat distribution device 20 configured to direct a stream of a heated fluid, in particular a stream of heated air, onto the web 4 of packaging material, in particular onto the longitudinal edge 4A, and/or onto the sealing strip 13, in particular onto the longitudinal portion 13A.

More in detail, the heat distribution device 20 is configured to direct a first stream of heated fluid onto the web 4 of packaging material, in particular onto the longitudinal edge 4A, and/or a second stream of heated fluid onto the sealing strip 13, in particular onto the longitudinal portion 13A.

The first stream of heated fluid is directed on an application face of the web 4 of packaging material that defines the inner surface 3 and the second stream of heated fluid is directed onto a face of the sealing strip 13 that is put into contact with the application face of the web 4 of packaging material.

The heat distribution device 20 comprises a heating device (not shown) configured to create a flow of heated fluid, and a distribution nozzle 21 having one or more outlet openings and being fluidically connected to the heating device so as to receive the flow of heated fluid and to expel the first stream of heated fluid and the second stream of heated fluid through the one or more outlet openings.

The distribution nozzle 21 comprises a main portion 22 comprising a first plurality of outlet openings and an auxiliary portion 23 connected to the main portion 22 and having a second plurality of outlet openings. In particular, the main portion 22 extends along a longitudinal axis B. The main portion 22 and/or the longitudinal axis B are arranged parallel to the web 4 of packaging material (while the web 4 of packaging material advances, in use, along the heat distribution device 20).

The auxiliary portion 23 extends along a longitudinal axis A. The auxiliary portion 23 and/or the longitudinal axis A are arranged parallel to the sealing strip 13 (while the sealing strip 13 advances, in use, along the heat distribution device 20).

Advantageously, the first plurality of outlet openings is configured to direct the first stream of heated fluid along a first direction D1, and the second plurality of outlet openings is configured to direct the second stream of heated fluid along a second direction D2. In particular, the first plurality of outlet openings and the second plurality of outlet openings are arranged such that the second direction D2 is transversal to the first direction D1.

The strip sealing device 19 comprises a pressing assembly 24 configured to press the web 4 of packaging material, in particular the longitudinal edge 4A, and/or the sealing strip 13, in particular the longitudinal portion 13A, towards and against one another. The pressing assembly 24 comprises a main roller 25 and an auxiliary counter roller 26. In use, the web 4 of packaging material, in particular the longitudinal edge 4A, and the sealing strip 13, in particular the longitudinal portion 13A, are superimposed to one another and interposed between the main roller 25 and the auxiliary counter roller 26 for guaranteeing a secure sealing of the sealing strip 13, in particular of the longitudinal portion 13A, to the web 4 of packaging material, in particular to the longitudinal edge 4A.

The advancement device 18 is configured to advance, in particular in a continuous manner, the sealing strip 13 from a storing station to the strip sealing device 19. More in detail, the advancement device 18 comprises a magazine unit (not shown) arranged at the storing station and an advancement group 27 for advancing the sealing strip 13. The magazine unit comprises at least a support reel (not shown) to carry the sealing strip 13 in a wound-up manner and being rotatable around an axis. The sealing strip 13 is unwound from the support reel and fed to the strip sealing device 19 through the advancement group 27. When unwound from the reel, the sealing strip 13 has the shape of a continuous planar web.

The advancement group 27 comprises a number of guide rollers 28 configured to guide the sealing strip 13 to the strip sealing device 19. Advantageously, the advancement device 18 comprises a support panel (not shown) for supporting the magazine unit and at least partly the advancement group 27.

The strip application apparatus 12 comprises a mobile frame 29 for supporting the strip sealing device 19. In particular, the mobile frame 19 comprises an upper crossbar 30A and a lower crossbar 30B connected by at least a lateral upright 31. The strip sealing device 19 is connected to the lateral upright 31. More in detail, the strip sealing device 19 is connected to the lateral upright 31 in a fixed manner.

The packaging machine 1 comprises a sealing chamber SC delimiting an inner environment IE from an outer environment OE. In use, during normal operation of the packaging machine 1, the strip application apparatus 12 is at least partially arranged within the sealing chamber SC. Preferably, the strip application apparatus 12 is entirely arranged within the sealing chamber SC. More in detail, when in use, during normal operation of the packaging machine 1, the strip application apparatus 12 is at least partially arranged within the inner environment IE. Preferably, when in use, during normal operation of the packaging machine 1, the strip application apparatus 12 is entirely arranged within the inner environment IE.

The sealing chamber SC is enclosed by a fixed structure 33 comprising at least one fixed rail, in particular an upper fixed rail (not shown) and a lower fixed rail 32, on which the mobile frame 29 slides. In other words, the mobile frame 29 for supporting the strip sealing device 19 is configured to slide on the upper fixed rail and the lower fixed rail 32 between two end positions. The mobile frame 29 is movable indeed along a direction T from a production position to a maintenance position, and vice versa from a maintenance position to a production position.

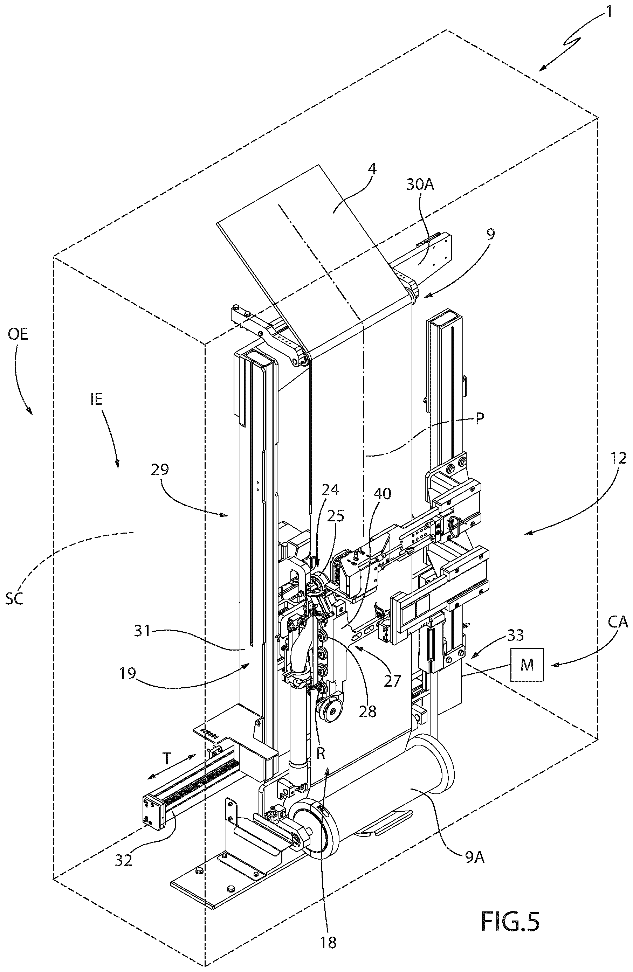

The production position is disclosed in figure 5 and corresponds to the position in which the sealing strip 13, in particular the longitudinal portion 13A, is applied onto the web 4 of packaging material, in particular onto the longitudinal edge 4A, during normal operation of the packaging machine 1. In the production position the strip sealing device 19 is arranged in the area of the web 4 of packaging material. In particular, in the production position the strip sealing device 19 is arranged at the web 4 of packaging material. Advantageously, in the production position, the sealing strip 13, in particular the longitudinal portion 13A, and the web 4 of packaging material, in particular the longitudinal edge 4A are mutually superimposed and interposed between the main roller 25 and the auxiliary counter roller 26.

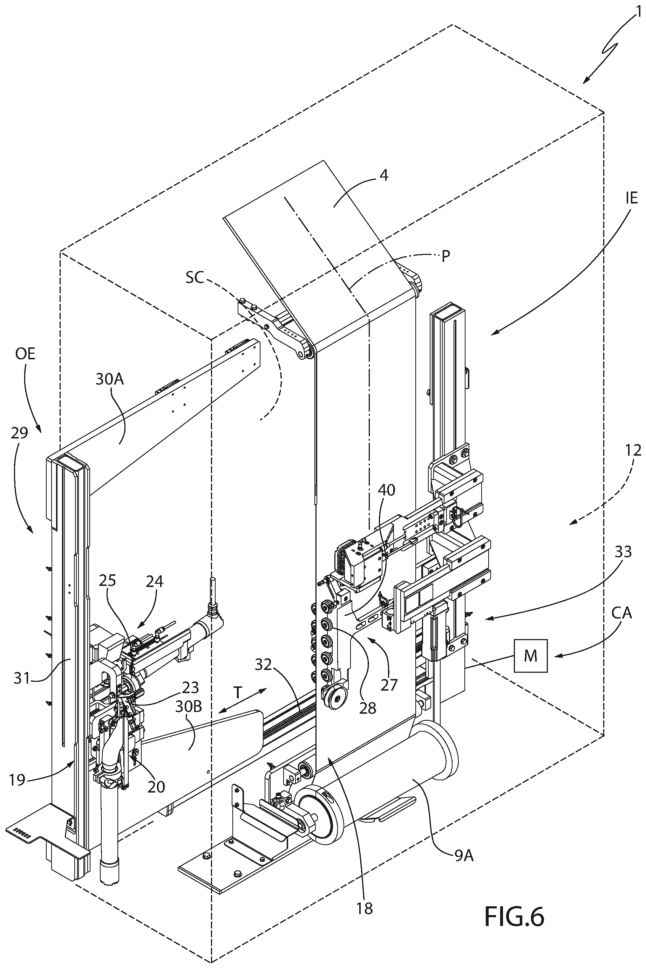

The maintenance position is disclosed in figure 6 and corresponds to the position in which an operator can access the strip sealing device 19 and the strip sealing device 19 is arranged at a distance from the web 4 of packaging material. In the maintenance position, the sealing strip 13, in particular the longitudinal portion 13A, cannot be applied onto the web 4 of packaging material, in particular onto the longitudinal edge 4A.

The advancement device 18 (particularly the magazine unit and the advancement group 27 for advancing the sealing strip 13) are not arranged on the mobile frame 29.

In the production position, the mobile frame 29 is arranged within the sealing chamber SC. In particular, in the production position, the mobile frame 29 is entirely arranged within the sealing chamber SC. In the production position, the mobile frame 29 is arranged within the inner environment IE. In particular, in the production position, the mobile frame 29 is entirely arranged within the inner environment IE.

In the maintenance position, the mobile frame 29 is arranged outside the sealing chamber SC. In particular, in the production position, the mobile frame 29 is at least partially arranged outside the sealing chamber SC. Even more in particular, in the production position, the mobile frame 29 is entirely arranged outside the sealing chamber SC. In the maintenance position, the mobile frame 29 is arranged within the outer environment OE. In particular, in the maintenance position, the mobile frame 29 is entirely arranged within the outer environment OE. In the maintenance position, an operator can easily have access to the strip sealing device 19 for maintenance operations.

The strip application apparatus 12 further comprises a control apparatus CA aimed at supervising the operation of the whole strip application apparatus 12. In particular, the control apparatus CA is configured for checking and controlling the position of the strip sealing device 19, in particular of the distribution nozzle 21, with respect to the web 4 of packaging material, in particular with respect to a longitudinal border 4* of the web 4 of packaging material.

The control apparatus CA comprises an imaging device 34. The imaging device 34 comprises at least a sensor 35, preferably an optic sensor, configured to frame at least a portion of the longitudinal border 4*. The sensor 35 is preferably a camera 35.

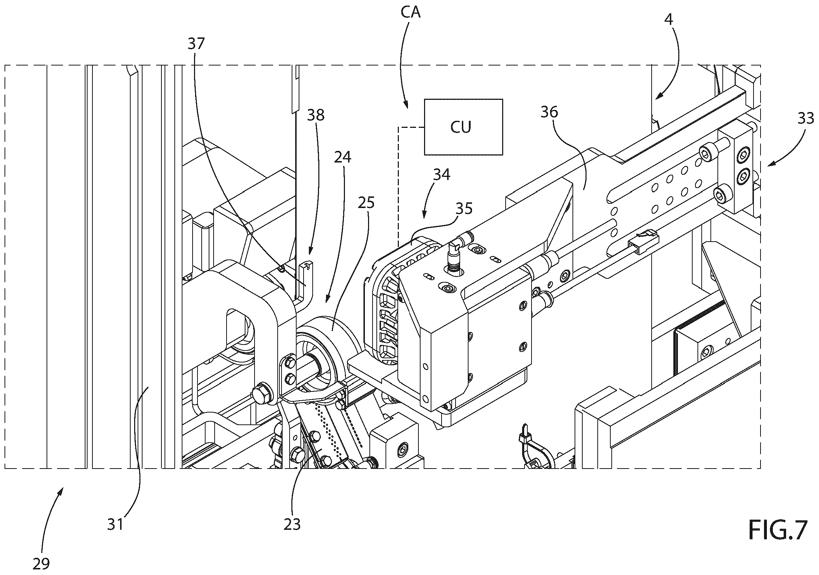

The imaging device 34 is arranged downstream of the pressing assembly 24 along the web conveying path P. As disclosed in figure 7, the imaging device 34 is arranged in close proximity of the pressing assembly 24. Preferably, the imaging device 34 is arranged above the pressing assembly 24.

The control apparatus CA further comprises a bracket 36 connected to the fixed structure 33 and configured to support the imaging device 34. The bracket 36 is arranged in a position such that the imaging device 34 faces the longitudinal border 4*. The bracket 36 is arranged in a fixed position with respect to the longitudinal border 4*. The imaging device 34 is therefore arranged in a fixed position with respect to the longitudinal border 4*.

The control apparatus CA further comprises a bracket 37 connected to the mobile frame 29, in particular to the lateral upright 31. The bracket 37 has a first end connected to the mobile frame 29, in particular connected to the lateral upright 31. The bracket 37 is therefore arranged in a variable (not fixed) position with respect to the longitudinal border 4*.

The bracket 37 also has a second end, opposite to the first end, comprising a reference marker 38. The reference marker 38 is therefore arranged in a variable (not fixed) position with respect to the longitudinal border 4*. In other words, the reference marker 38 is movable with respect to the web 4 of packaging material, in particular with respect to the longitudinal border 4*.

Advantageously, the reference marker 38 is defined by a notch (or slit) 39 obtained in said second end of the bracket 37. The bracket 37 is configured to be interposed, in use (i.e. when the mobile frame 29 is in the operation position), between the imaging device 34 and the longitudinal border 4*.

In a preliminary set-up and design phase a reference position of the mobile frame 29 (and, as a consequence, of the strip sealing device 19 and of the bracket 37) is determined. The reference position corresponds to a correct working condition of the strip application apparatus 12. In the reference position, the longitudinal border 4* is positioned within the notch 39.

The imaging device 34 is configured to acquire at least one image of the longitudinal border 4* and the reference marker 38. Preferably, the imaging device 34 is configured to acquire a plurality of images of the longitudinal border 4* and the reference marker 38 at a defined time rate. Advantageously, the imaging device 34 is configured to continuously image the longitudinal border 4* and the reference marker 38.

Preferably, the imaging device 34 is also configured to image a longitudinal portion 13B of the sealing strip 13. The longitudinal portion 13B is not sealed to the web 4 of packaging material. Advantageously, the imaging device 34 is preferably configured to cover the whole transversal extension of the sealing strip 13.

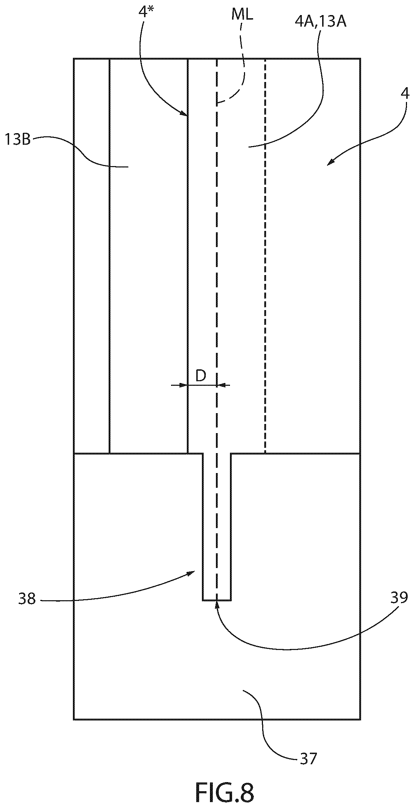

A typical image captured by the imaging device 34 is illustrated in figure 8. The image shows the longitudinal portion 13B, a section of web 4 of packaging material including the longitudinal border 4* and the second end of the bracket 37 together with the reference marker 38.

According to a preferred embodiment, the imaging device 34 also comprises a light source configured to illuminate at least the longitudinal border 4* and the reference marker 38.

As already stated above, the control apparatus CA is configured for checking and controlling the position of the strip sealing device 19, in particular of the distribution nozzle 21, with respect to the web 4 of packaging material, in particular with respect to the longitudinal border 4* for guaranteeing that the sealing strip 13 is correctly placed and sealed to avoid contact of the longitudinal border 4* with the pourable product.

Advantageously, the control apparatus CA comprises a control unit CU connected to the imaging device 34. In particular, the imaging device 34 is configured for generating and transmitting to the control unit CU a signal indicating a transversal distance D between a longitudinal middle line ML of the notch 39 and the longitudinal border 4*. The control unit CU is configured to determine a correct position of the strip sealing device 19, in particular of the distribution nozzle 21, with respect to the web 4 of packaging material, in particular with respect to the longitudinal border 4*, as a function of the transversal distance D. The transversal distance D is determined from the center of the notch 39 to the longitudinal border 4*. The transversal distance D indicates the transversal distance between the reference marker 38 and the longitudinal border 4*. Advantageously, in the reference position, the longitudinal middle line ML of the notch 39 and the border 4* coincide, i.e. the transversal distance D from the center of the notch 39 to the longitudinal border 4* is null.

The control unit CU further compares the value of the transversal distance D to a predetermined distance range. The control unit CU is configured to determine a correct position of the strip sealing device 19, in particular of the distribution nozzle 21, with respect to the web 4 of packaging material, in particular with respect to the longitudinal border 4*, if the transversal distance D lies within the predetermined distance range.

In case the transversal distance D is not comprised within the predetermined distance range, the control unit CU is configured to generate a signal for informing of an undesired and significant deviation from the reference position. In other words, the control unit CU is configured to determine a non-correct position of the strip sealing device 19, in particular of the distribution nozzle 21, with respect to the web 4 of packaging material, in particular with respect to the longitudinal border 4*, if the transversal distance D lies outside of the predetermined distance range.

Preferentially, the control unit CU is configured to evaluate a correct position of the strip sealing device 19, in particular of the distribution nozzle 21, with respect to the web 4 of packaging material, in particular with respect to the longitudinal border 4*, based on successively acquired images. In particular, the control unit CU is configured to determine an average transversal distance from the multiple transversal distances D and to evaluate a correct position of the strip sealing device 19, in particular of the distribution nozzle 21, with respect to the web 4 of packaging material, in particular with respect to the longitudinal border 4*, as a function of said average transversal distance.

The mobile frame 29 comprises a linear actuator, in particular a linear motor M, preferably coupled to the crossbars 30. More specifically, the linear actuator, in particular the linear motor M, is also connected to the control unit CU. The linear actuator, in particular the linear motor M, is controllable by the control unit CU and is configured to move the mobile frame 29 along the direction T.

According to a preferred embodiment, the control unit CU is configured to control the position of the mobile frame 29 (and, as a consequence, of the distribution nozzle 21) as a function of the transversal distance D.

If the transversal distance D lies within the predetermined distance range, the position of the mobile frame 29 remains unchanged.

On the contrary, if the transversal distance D is not comprised within the predetermined distance range, the control unit CU is configured to operate the linear actuator, in particular the linear motor M, to move the mobile frame 29. More in detail, the displacement of the mobile frame 29 along the direction T is determined as a function of the transversal distance D. The position of the mobile frame 29 along the direction T is adjusted based on the transversal distance D. In particular, the mobile frame 29 is moved along the direction T to reestablish the reference position in which the transversal distance D is null so that the longitudinal middle line ML and the border 4* coincide.

According to a preferred embodiment, the advancement device 18 is arranged on a bar 40, which is movable along the direction T by means of actuating means, in particular a servomotor (not shown). Advantageously, the control unit CU is configured to detect the position of the sealing strip 13 with respect to the longitudinal border 4*. In case the detected position does not correspond to a preset correct position, the control unit CU actuates the bar 40 to move the advancement device 18 along the direction T so as to reestablish the correct position and so guarantee a proper application of the sealing strip onto the web 4 of packaging material.

The apparatus and method described above have some advantages, in particular the control unit CU and the imaging device 34 are configured to position the strip sealing device 19 with respect to the longitudinal border 4* in a very reliable and accurate manner.

### LIST OF REFERENCE NUMERALS

| | |
|---|---|
| 1 | packaging machine |
| 2 | packages |
| 3 | inner surface |
| 4 | web of packaging material |
| 4A | longitudinal edge |
| 4B | further longitudinal edge |
| 5 | longitudinal seam portion |
| 6 | transversal seam portion |
| 7 | inner space |
| 8 | sealing strip section |
| 9 | conveying apparatus |
| 9A | roller |
| 10 | tube forming and sealing unit |
| 11 | tube |
| 12 | strip application apparatus |
| 13 | sealing strip |
| 13A | longitudinal portion |
| 14 | filling device |
| 15 | forming ring assembly |
| 17 | filling pipe |
| 18 | advancement device |
| 19 | strip sealing device |
| 20 | heat distribution device |
| 21 | distribution nozzle |
| 22 | main portion |
| 23 | auxiliary portion |
| 24 | pressing assembly |
| 25 | main roller |
| 26 | auxiliary counter roller |
| 27 | advancement group |
| 28 | guide rollers |
| 29 | mobile frame |
| 30A | upper crossbar |
| 30B | lower crossbar |
| 31 | lateral upright |
| 32 | lower fixed rail |
| 33 | fixed structure |
| 34 | imaging device |
| 35 | sensor |
| 36 | bracket |
| 37 | bracket |
| 38 | reference marker |
| 39 | notch |
| 40 | bar |
| P | web conveying path |
| A | longitudinal axis |
| B | longitudinal axis |
| D1 | first direction |
| D2 | second direction |
| R | strip conveying path |
| SC | sealing chamber |
| IE | inner environment |
| OE | outer environment |
| CA | control apparatus |
| CU | control unit |
| D | distance |
| ML | middle line |
| T | direction |
| M | motor |

## Claims

1. A strip application apparatus (12) for applying a sealing strip (13) of a heat-sealable material onto a web (4) of packaging material, the strip application apparatus (12) comprising a strip sealing device (19) configured to seal a longitudinal portion (13A) of the sealing strip (13) to a longitudinal edge (4A) of the web (4) of packaging material, and a control apparatus (CA) configured to determine the position of the strip sealing device (19) with respect to a longitudinal border (4*) of the web (4) of packaging material, the control apparatus (CA) comprising:
- a reference marker (38) connected to the strip sealing device (19);
- an imaging device (34) arranged in a fixed position with respect to the longitudinal border (4*) and configured to acquire at least one image of the longitudinal border (4*) and of the reference marker (38); and
- a control unit (CU) connected to the imaging device (34) and configured to determine a transversal distance (D) between the reference marker (38) and the longitudinal border (4*) and to evaluate a correct position of the strip sealing device (19) with respect to the longitudinal border (4*) as a function of the transversal distance (D).

2. - A strip application apparatus according to claim 1, wherein the reference marker (38) is movable with respect to the longitudinal border (4*).

3. A strip application apparatus according to claim 1 or 2, wherein the strip sealing device (19) is movable along a transversal direction (T) so that the position of the strip sealing device (10) con be varied with respect to the longitudinal border (4*); and wherein the control unit (CU) is configured to adjust the position of the strip sealing device (19) as a function of the transversal distance (D).

4. A strip application apparatus according to claim 3, and further comprising:
- a mobile frame (29) configured to support the reference marker (38) and the strip sealing device (19) and movable along the transversal direction (T); and
- a linear actuator controllable by the control unit (CU) and configured to move the mobile frame (29) along the direction (T) as a function of the transversal distance (D).

5. A strip application apparatus according to claim 3 or 4, wherein the control unit (CU) is configured to adjust the position of the strip sealing device (19) and/or of the mobile frame (29) if the transversal distance (D) is not comprised within a predetermined distance range.

6. A strip application apparatus according to any previous claim, wherein the imaging device (34) is configured to acquire multiple images of the longitudinal border (4*) and of the reference marker (38), and the control unit (CU) is configured to determine an average transversal distance of the multiple images and to evaluate a correct position of the strip sealing device (19) with respect to the longitudinal border (4*) as a function of average transversal distance (D).

7. A strip application apparatus according to any previous claim, wherein the reference marker (38) is configured to be interposed, in use, between the imaging device (34) and the longitudinal border (4*) and comprises a notch (39) obtained in a bracket (37) connected to the strip sealing device (19); and wherein the control unit (CU) is configured to determine the transversal distance (D) between a longitudinal middle line (ML) of the notch (39) and the longitudinal border (4*).

8. A strip application apparatus according to any previous claim, wherein the strip sealing device (19) comprises a pressing assembly (24) configured to press the longitudinal edge (4A) and the longitudinal portion (13A) to one another; wherein the imaging device (34) is arranged downstream of the pressing assembly (24) along a web conveying path (P) of the web (4) of packaging material.

9. A packaging machine (1) for packaging a pourable product into packages (2) obtained from a web (4) of packaging material, the packaging machine (1) comprising a strip application apparatus (12) according to any one of the claims from 1 to 8.

10. A packaging machine according to claim 9, and further comprising:
- a conveying apparatus (9) for advancing the web 4 of packaging material along a conveying path (P);
- a tube forming and sealing unit (10) configured to gradually fold the web (4) of packaging material into a tube (11) and longitudinally sealing the tube (11); and
- a filling device (14) for filling the tube (11) with the pourable product.

11. - A method for applying a sealing strip (13) of a heat-sealable material onto a web (4) of packaging material comprising the steps of:
- arranging an imaging device (34) in a fixed position with respect to the longitudinal border (4*);
- acquiring at least one image of the longitudinal border (4*) and of a reference marker (38) by means of the imaging device (34);
- determining a transversal distance (D) between the reference marker (38) and the longitudinal border (4*) by means of the at least one image;
- evaluating a correct position of the strip sealing device (19) with respect to the longitudinal border (4*) as a function of the transversal distance (D) and
- applying a longitudinal portion (13A) of the sealing strip (13) onto a longitudinal edge (4A) of the web (4) of packaging material.

12. - A method according to claim 11, and further comprising the further step of adjusting the position of a strip sealing device (19) configured to seal the longitudinal portion (13A) of the sealing strip (13) to the longitudinal edge (4A) of the web (4) of packaging material with respect to the longitudinal border (4*) as a function of the transversal distance (D).
